# EUROPÄISCHE PATENTSCHRIFT

(11) **EP 2 243 192 B1**
(45) Veröffentlichungstag und Bekanntmachung des Hinweises auf die Patenterteilung: **27.05.2015**
(21) Anmeldenummer: 08734582.3
(22) Anmeldetag: 12.02.2008
(51) Int. Cl.: H01Q 1/22, G06K 19/077, H01Q 9/32, H01Q 11/08

(54) **IDENTIFIKATIONSMARKE ZUR IDENTIFIKATION VON OBJEKTEN MIT METALLISCHER OBERFLÄCHE**
IDENTIFICATION TAG FOR IDENTIFYING OBJECTS WITH A METAL SURFACE
MARQUE D'IDENTIFICATION POUR IDENTIFIER DES OBJETS À SURFACE MÉTALLIQUE

(43) Veröffentlichungstag der Anmeldung: 27.10.2010
(73) Patentinhaber: Siemens Aktiengesellschaft, 80333 München (DE)
(72) Erfinder: ELBINGER, Gerd, 90766 Fürth (DE); MÜLLER,Klaus, 96178 Pommersfelden (DE); RÖTTER, Gerhard, 90587 Veitsbronn (DE)
(86) Internationale Anmeldenummer: PCT/EP2008/001062
(87) Internationale Veröffentlichungsnummer: WO 2009/100729

(56) Entgegenhaltungen:
- EP-A- 1 622 069
- EP-A- 1 921 570
- WO-A-00/63565
- DE-C1- 10 056 473
- JP-A- 2003 076 966
- JP-A- 2005 003 192
- US-A1- 2003 156 033

## Beschreibung

Die Erfindung betrifft eine Einrichtung zur Identifikation eines Objekts mit zumindest teilweiser metallischer Oberfläche, mit einer Identifikationsmarke, die eine Antenne aufweist und die auf der metallischen Oberfläche zumindest mittelbar befestigt ist.

Eine derartige Einrichtung findet bereits in der Praxis Anwendung. Zum Beispiel ist es bekannt, bei derartigen Einrichtungen eine Dipol-Antenne mit einem gewissen Abstand mithilfe eines Abstandshalters auf der Metalloberfläche anzubringen. Die Bauform ist hier relativ groß, und die resultierende Richtwirkung des Antennenfeldes ist orthogonal zur Polarisationsachse der Antenne.

Weiterhin ist es bekannt, inverted F-Antennen einzusetzen die flach ausgeprägt sind und bei denen der Abstandhalter entfallen kann. Auch diese haben bei manchen Applikationen ungünstige Richtwirkung, da das Erkennungsmaximum orthogonal zum Identifikationsobjekt gerichtet ist.

In der Automobilproduktion und im Maschinenbau allgemein wird zunehmend RFID-Technologie im UHF- oder Mikrowellenfrequenzband zur Identifikation von Werkzeugen und Werkstücken benötigt, die ganz oder zum überwiegenden Teil aus Metall bestehen. Dabei soll die Identifikationsmarke, die als Tag, Transponder oder mobiler Datenspeicher ausgeführt sein kann, direkt auf Metallteilen oder Metalloberflächen des zu identifizierenden Objekts angebracht werden.

Aus der Druckschrift EP 1 622 069 A1 - Sakama et al. "Radio frequency IC tag and bolt with an IC tag" ist eine Einrichtung zur Identifikation eines Objekts mit zumindest teilweiser metallischer Oberfläche bekannt, wobei ein elektrischer Kontakt zwischen einem Schaltkreis der Einrichtung und der metallischen Oberfläche vorgesehen ist.

Daher liegt der Erfindung die Aufgabe zu Grunde, eine Einrichtung der oben genannten Art zu schaffen, die eine applikationsspezifische Richtwirkung des Antennenfeldes ermöglicht.

Die Aufgabe wird durch eine Einrichtung mit den Merkmalen nach Anspruch 1 gelöst.

Vorteilhafte Weiterbildungen der Erfindung sind den Unteransprüchen zu entnehmen.

Ein Ausführungsbeispiel der Erfindung wird im Folgenden anhand einer Zeichnung näher erläutert.

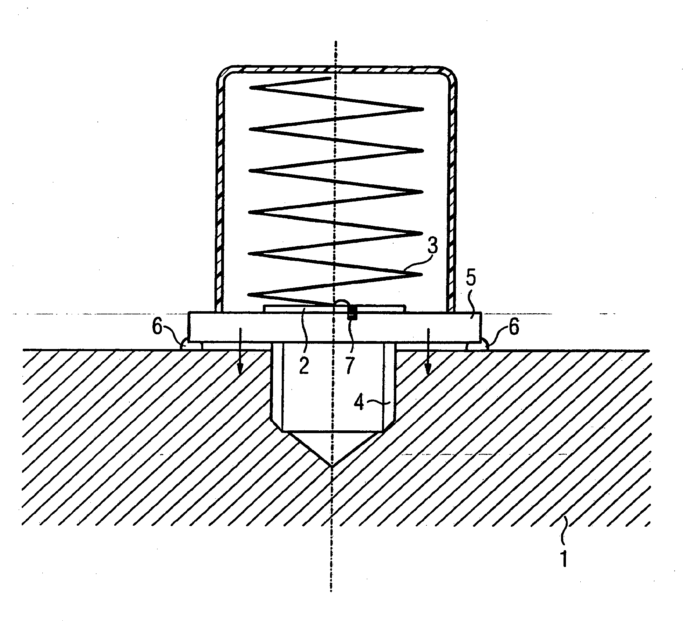

In der Zeichnung ist eine Einrichtung zur Identifikation eines Objekts 1 mit zumindest teilweiser metallischer Oberfläche dargestellt. Das Objekt 1 kann ein Metallkörper sein, zum Beispiel ein Werkstück, ein Werkzeug, ein Metallbehälter, eine Automobilkarosserie etc. Die Einrichtung weist eine Identifikationsmarke 2 auf, die in bekannter Weise z.B. als Tag, Transponder oder mobiler Datenspeicher ausgeführt sein kann. Außerdem umfasst die Einrichtung eine Antenne 3, die zumindest mittelbar auf der metallischen Oberfläche befestigt ist. Zwischen der metallischen Oberfläche und der Antenne 3 besteht ein großflächiger, elektrischer Kontakt oder eine enge kapazitive Kopplung. Hierbei wirkt die metallische Oberfläche des zu identifizierenden Objekts als Gegengewicht beziehungsweise Reflektor für die Antenne 3.

Der elektrische Kontakt oder die enge kapazitive Kopplung wird durch einen großen Anpressdruck der Einrichtung auf der metallischen Oberfläche hergestellt. Dies erfolgt, indem die Einrichtung mit einer Kraft durch ein Schraubgewinde 4 an das Objekt 1 gedrückt wird.

Die Antenne 3 ist vorteilhafter Weise als helix- oder stabförmiger Monopol ausgeführt. Ihre Polarisationsachse kann senkrecht zur metallischen Oberfläche oder deutlich von ihr weggerichtet sein, um eine gewünschte Richtwirkung des Antennenfelds zu erreichen.

Die Identifikationsmarke 2 ist auf einem elektrisch leitenden Träger 5 aufgebracht, der über Kontaktstellen mit der metallischen Oberfläche elektrisch verbunden ist. Erfindungsgemäß sind die Kontaktstellen 6 als Kontaktierring ausgeführt. Es besteht eine elektrische Verbindung 7 zwischen der Antenne 3 zum leitenden Träger 5. Bei der Einrichtung wird die Kraft für den Anpressdruck auf die metallische Oberfläche über den elektrisch leitenden Träger 5 ausgeübt.

Besonders vorteilhaft bei der erfindungsgemäßen Einrichtung ist, dass durch die Anbringung und Ausrichtung der helixoder stabförmigen Antenne 3 auf der metallischen Oberfläche die Geometrie des Antennenfeldes beeinflusst oder geformt werden kann. So ist es z.B. möglich ein achsenzentrisches Ringfeld aufzubauen, was eine Datenübertragung im vollen zentrischen Umfang orthogonal zur Polarisationsachse der Antenne 3 ermöglicht. Dies bringt wesentliche Vorteile, wenn bei weiteren Bearbeitungsschritten das Objekt teilweise umbaut wird, so dass ein senkrechtes Auslesen oder Erkennen nicht mehr möglich ist. Es ist außerdem möglich, aus senkrecht zueinander stehenden Richtungen die Identifikationsmarke 2 zu erkennen und auszulesen.

## Patentansprüche

1. Einrichtung zur Identifikation eines Objekts (1) mit zumindest teilweiser metallischer Oberfläche, mit einer Identifikationsmarke (2) und einer Antenne (3), die auf der metallischen Oberfläche zumindest mittelbar befestigt ist,
wobei
- ein flächiger elektrischer Kontakt oder eine enge kapazitive Kopplung zwischen der metallischen Oberfläche und der Antenne (3) durch einen Anpressdruck auf die metallische Oberfläche hergestellt ist, und
- die Antenne (3) als helix- oder stabförmiger Monopol ausgeführt ist, wobei die Polarisationsachse der Antenne (3) von der metallischen Oberfläche weggerichtet ist oder senkrecht zu dieser steht, und
die Identifikationsmarke (2) auf einem elektrisch leitenden Träger (5) aufgebracht ist, der über Kontaktstellen (6) mit der metallischen Oberfläche elektrisch verbunden ist, **dadurch gekennzeichnet,**
**dass** die Kontaktstellen (6) als Kontaktierring ausgeführt sind.

2. Einrichtung nach einem Anspruch 1,
**dadurch gekennzeichnet,**
**dass** der Anpressdruck über ein Schraubgewinde (4) erfolgt.

3. Einrichtung nach einem der vorangehenden Ansprüche,
**dadurch gekennzeichnet,**
**dass** eine elektrische Verbindung (7) zwischen dem aus Antenne (3) und Identifikationsmarke (2)gebildeten Netzwerk und dem leitenden Träger (5) besteht.

4. Einrichtung nach einem der vorangehenden Ansprüche,
**dadurch gekennzeichnet,**
**dass** die Identifikationsmarke (2) als RFID-Tag, als Transponder oder als mobiler Datenspeicher ausgeführt ist.

5. Verwendung einer Einrichtung nach einem der vorangehenden Ansprüche,
**dadurch gekennzeichnet,**
**dass** das Objekt (1) ein Werkzeug oder Werkstückträger ist.

6. Verwendung einer Einrichtung nach einem der vorangehenden Ansprüche 1 bis 4,
**dadurch gekennzeichnet,**
**dass** das Objekt (1) ein Metallbehälter, insbesondere ein Metallfass ist.

## Claims

1. Device for identification of an object (1) having an at least partially metallic surface, having an identification mark (2) and an antenna (3) which is at least indirectly mounted on the metallic surface,
wherein
- a flat electrical contact or close capacitive coupling is produced between the metallic surface and the antenna (3) by a contact pressure on the metallic surface, and
- the antenna (3) is a helical monopole or a monopole in the form of a rod, wherein the polarization axis of the antenna (3) points away from the metallic surface, or is at right angles to it, and the identification mark (2) is applied to an electrically conductive mount (5), which is electrically connected via contact points (6) to the metallic surface,
**characterized in that** the contact points (6) are in the form of a contact ring.

2. Device according to Claim 1, **characterized in that** the contact pressure is applied via a screw thread (4).

3. Device according to one of the preceding claims, **characterized in that** an electrical connection (7) exists between the network formed from the antenna (3) and the identification mark (2), and the conductive mount (5).

4. Device according to one of the preceding claims,
**characterized in that** the identification mark (2) is in the form of an RFID tag, a transponder or a mobile data memory.7.

5. Use of a device according to one of the preceding claims,
**characterized in that** the object (1) is a tool or a workpiece mount.

6. Use of a device according to one of the preceding Claims 1 to 4,
**characterized in that** the object (1) is a metal container, in particular a metal barrel.

## Revendications

1. Dispositif d'identification d'un objet (1) ayant une surface métallique, au moins en partie, comprenant un repère (2) d'identification et une antenne (3), qui est fixée, au moins indirectement, sur la surface métallique,
dans lequel
- un contact électrique à la manière d'une surface ou un couplage capacitif étroit entre la surface métallique et l'antenne (3) est produit par une pression d'application sur la surface métallique et
- l'antenne (3) est réalisée sous la forme d'un monopôle en forme d'hélice ou en forme de barreau, l'axe de polarisation de l'antenne (3) s'éloignant de la surface métallique ou lui étant perpendiculaire et
le repère (2) d'identification est déposé sur un support (5), qui est conducteur de l'électricité et qui est relié électriquement à la surface métallique par des points (6) de contact,
**caractérisé**
**en ce que** les points (6) de contact sont réalisés sous la forme d'une bague de contact.

2. Dispositif suivant la revendication 1,
**caractérisé**
**en ce que** la pression d'application est obtenue par un filetage (4) de vis.

3. Dispositif suivant l'une des revendications précédentes,
**caractérisé**
**en ce qu'**il y a une liaison (7) électrique entre le support (5) conducteur et le réseau formé par l'antenne (3) et le repère (2) d'identification.

4. Dispositif suivant l'une des revendications précédentes,
**caractérisé**
**en ce que** le repère (2) d'identification est réalisé sous la forme d'une étiquette RFID, d'un transpondeur ou d'une mémoire de données mobile.

5. Utilisation d'un dispositif suivant l'une des revendications précédentes,
**caractérisée**
**en ce que** l'objet (1) est un outil ou un porte-pièce.

6. Utilisation d'un dispositif suivant l'une des revendications précédentes 1 à 4,
**caractérisée**
**en ce que** l'objet (1) est un récipient métallique, notamment un fût métallique.
